# EUROPÄISCHE PATENTSCHRIFT

(11) **EP 1 198 167 B1**
(45) Veröffentlichungstag und Bekanntmachung des Hinweises auf die Patenterteilung: **18.06.2003**
(21) Anmeldenummer: 00934934.1
(22) Anmeldetag: 28.04.2000
(51) Int. Cl.: A01G 1/00, E04D 11/00

(54) **BAHNFÖRMIGER VEGETATIONSKÖRPER ZUR DACHBEGRÜNUNG IN DÜNNSCHICHTBAUWEISE**
STRIPLIKE BODY OF VEGETATION FOR COVERING ROOFS WITH THIN LAYERS OF VEGETATION
CORPS VEGETAL EN FORME DE BANDE POUR L'ENGAZONNEMENT DE TOITS SELON LA METHODE DES COUCHES MINCES

(30) Priorität: 21.07.1999 DE 19934203
(43) Veröffentlichungstag der Anmeldung: 24.04.2002
(73) Patentinhaber: Behrens, Wolfgang, D-27243 Gross Ippener (DE)
(72) Erfinder: Behrens, Wolfgang, D-27243 Gross Ippener (DE)
(74) Vertreter: Patentanwälte Thömen & Körner
(86) Internationale Anmeldenummer: DE0001386
(87) Internationale Veröffentlichungsnummer: WO01006837

(56) Entgegenhaltungen:
- EP-A- 0 047 365
- DE-A- 3 408 698
- DE-A- 19 740 682

## Beschreibung

Die Erfindung betrifft einen bahnförmigen Vegetationskörper zur Dachbegrünung in Dünnschichtbauweise gemäß dem Oberbegriff des Patentanspruchs 1, und die Erfindung betrifft weiter ein Verfahren zur Herstellung eines derartigen Vegetationskörpers.

Unter bahnförmigen Vegetationskörpern zur Dachbegrünung in Dünnschichtbauweise, wie sie beispielsweise aus der DE 197 40 682 A1 bekannt sind, versteht man mattenartige Vegetationsträger, welche eine Strukturmatte aufweisen, welche auf einer Unterlage angeordnet ist. Derartige Vegetationskörper sind relativ dünn und sollen im Gegensatz zur herkömmlichen Substratbauweise mehrere Funktionen in sich vereinigen.

Die Strukturmatte dient dazu, Substrat und Wurzeln der Pflanzen aufzunehmen, wobei die Strukturmatte den Halt des Substrates und der Pflanzen sichern soll. Die unterseitig angebrachte Unterlage in Form eines filzartigen Vlieses dient der Wasserspeicherung. Die übliche Schichtdicke derartiger Vegetationskörper beträgt etwa 1 bis 5 cm. Vorteilhaft an diesen Vegetationskörpern zur Dachbegrünung in Dünnschichtbauweise ist, daß sie relativ leicht sind, wodurch sich die Dachlast auf nur etwa 30 kg pro Quadratmeter erhöht, wohingegen Substratbauweisen eine erhöhte Dachlast von mehr als 80 kg/m² bedingen.

Das geringe Gewicht derartiger Vegetationskörper ist allerdings gleichzeitig problematisch. Denn hierdurch sind derartige Vegetationskörper bei Dächern mit einer Höhe über acht Metern einem kritischen Windsog ausgesetzt, der dazu führt, daß die Matten durch Windsogkräfte angesaugt und abgehoben werden. Dies führt zu Sogspitzen durch Böigkeit der Vegetationskörper, welche die Vegetationskörper selbst, die Begrünung und die Dachkonstruktion belasten.

In der DE 197 40 682 A1 ist bereits vorgeschlagen worden, den Windkräften dadurch entgegenzutreten, daß mehrere bahnförmige Vegetationskörper überlappend verlegt werden, wodurch erreicht wird, daß Wurzeln von Pflanzen durch zwei überlappende Vegetationskörper hindurch wurzeln und die Vegetationskörper an den Seitenkanten miteinander verbinden. Durch eine derartige Ausgestaltung wird erreicht, daß Wind die Vegetationskörper nicht mehr unterströmen können. Dennoch können auch derartige Matten nicht die oberseitig auftretenden Windsogkräfte entgegenwirken, da die dichte, filzartige Unterlage wie eine nahezu undurchlässige Membran wirkt, welche von Windsogkräften angesaugt werden kann.

Es ist bereits vorgeschlagen worden, den Windsogkräften dadurch entgegenzuwirken, daß die Vegetationskörper mit einer Kiesaufschüttung versehen und damit stabilisiert werden. Diese Kiesauflasten zur Lagesicherung der Vegetationskörper erhöhen aber in unerwünschtem Maße die Dachlast, die man so gering als möglich halten will. Bislang war die Erhöhung der Dachlast durch eine Kiesaufschüttung zur Lagesicherung derartiger Vegetationskörper der einzig gangbare Weg, da man stets von dem Grundsatz ausgegangen ist, daß ein Vegetationskörper dann lagesicher ist, wenn die abhebend wirkende resultierende Windlast kleiner ist als das Flächengewicht der Vegetationsmatten. Entsprechend hat man bei größeren Windlasten auch das Flächengewicht der Vegetationsmatten erhöht. Eine andere Vorgehensweise war bislang nicht möglich, da aufgrund des großen Strömungswiderstandes beim Durchströmen der Vegetationskörper die flächige Durchlässigkeit vergleichsweise niedrig ist.

Der Erfinder hat es sich daher zur Aufgabe gemacht, einen Vegetationskörper der eingangs genannten Art zu schaffen, der unter Beibehaltung eines geringen Flächengewichtes und unter Beibehaltung der Funktionen derartiger Vegetationskörper lagesicher, das heißt, unempfindlich gegen Windsog auch bei großen Dachhöhen ist.

Diese Aufgabe wird mit einem bahnförmigen Vegetationskörper gemäß dem Oberbegriff des Patentanspruchs 1 geschaffen, welcher die Merkmale des kennzeichnenden Teils des Patentanspruchs 1 aufweist.

Erfindungsgemäß zeichnet sich ein bahnförmiger Vegetationskörper zur Dachbegrünung in Dünnschichtbauweise dadurch aus, daß wenigstens die Unterlage durch Einbringen von Löchern im Hinblick auf die Winddurchlässigkeit stark verbessert ist.

Auf überraschend einfache Art und Weise wird durch die Löcher erreicht, daß sich dem Windsog keine Angriffsfläche mehr bietet. Denn durch die Löcher wird die sonst geschlossene Unterseite unterbrochen bzw. geöffnet, so daß sich ein sofortiger Druckausgleich zwischen Ober- und Unterseite ergibt. Hier wird also ein Effekt nachgeahmt, der sich sonst nur bei herkömmlichen, schweren Substratbauweisen findet, da dort durch die Substratpartikel eine Vielzahl von Poren bzw. Öffnungen vorhanden ist, wodurch sich derartige Bauweisen gegenüber Windsog neutral verhalten. Ist die Unterlage nunmehr mit Löchern versehen, bietet der Vegetationskörper insgesamt keine Widerstandsfläche mehr gegen den Wind, eine Abhebung des Vegetationskörpers findet daher nicht mehr statt.

In experimentellen Versuchen hat sich bei Messungen in Anhalt an die DIN 1055 Teil 4 ergeben, daß bei unterschiedlichen Windstaudrücken in den Höhenstufen 0 m bis 8 m und 8 m bis 20 m bei einem Staudruck q in einem Bereich von 0,5 bis 0,8 kN/m² mit Löchern versehene Vegetationskörper lagesicher waren, welche ein Gewicht von unter 40 kg/m² aufwiesen.

Ein weiterer vorteilhafter Effekt der durch die Löcher erzielt werden kann, ist, daß die drainierende Wirkung der Unterlage durch die Löcher verbessert werden kann, ohne daß sich die Wasserspeicherkapazität der Unterlage signifikant verringern würde. Denn die Unterlage soll nicht nur Wasser speichern können, insbesondere in Trockenperioden, sondern sie soll auch bei entsprechendem Anfall Überschußwasser abzuleiten in der Lage sein, da sonst der Gasaustausch der Wurzeln der Pflanzen kritisch werden könnte. Durch die Löcher wird auch der Luftgehalt der Unterlage verbessert und es wird ein besseres Einwurzeln der Pflanzen in den unter der Unterlage befindlichen Schichtaufbau erreicht.

In vorteilhaften Ausgestaltungen der Erfindung kann vorgesehen sein, daß die Unterlage ein Gewicht von 30 bis 3500 g/m² aufweist, daß der Vegetationskörper mit 50 bis 1500 Löchern pro Quadratmeter versehen ist, wobei die Löcher einen Durchmesser von 2 bis 20 mm aufweisen und daß die Anzahl der Löcher in Abhängigkeit zur Dachhöhe gewählt wird. Bei bekannter Windbelastung kann der Durchlässigkeitswert berechnet werden.

In praktischen Ausgestaltungen der Erfindung kann vorgesehen sein, daß die Strukturmatte eine Schlingenmatte oder eine Fasermatte, insbesondere eine Fasermatte aus Kokosfasern, ist, und daß die Unterlage ein dichtes Nadelvlies, ein Polyestervlies, ein Polypropylenvlies, ein dichtes Baumwollvlies oder eine Steinwollmatte ist.

Ferner kann vorgesehen sein, daß zwischen Strukturmatte und Unterlage eine Armierung zur Aufnahme von Zugkräften angeordnet ist. Derartige Armierungen, beispielsweise Gitternetze, dünne aber stabile Polyestervliese und andere denkbare Materialien dienen dazu, bei Verlegung des Vegetationskörpers auf einem Dach mit einer Neigung größer 10° die entstehenden Zugkräfte aufzunehmen, wozu sonst weder die Strukturmatte noch die Unterlage in der Lage sind.

In einer weiteren praktischen Ausgestaltung ist vorgesehen, daß die Strukturmatte derart auf der Unterlage angeordnet ist, daß ein erster Seitenkantenbereich der Strukturmatte über eine erste Seitenkante der Unterlage übersteht, daß ein gegenüberliegender zweiter Seitenkantenbereich der Unterlage unter einer zweiten Seitenkante der Strukturmatte hervorsteht, so daß Strukturmatte und Unterlage nebeneinander liegender Vegetationskörper einander jeweils überlappen und daß die sich überlappenden Bereiche im kultivierten Zustand der Vegetationskörper in Folge der Durchwurzelungstätigkeit der Pflanzen miteinander verbunden sind.

Hier werden in vorteilhafter Weise die Vorteile des erfindungsgemäßen Vegetationskörpers mit einem aus der DE 197 40 682 A1 bekannten Vegetationskörpers kombiniert, so daß ein derart ausgestalteter Vegetationskörper nicht nur lagesicher, sondern auch unempfindlich gegen Trocknungsschrumpf ist.

Bei einem Verfahren zur Herstellung eines erfindungsgemäßen Vegetationskörpers zur Dachbegrünung in Dünnschichtbauweise wird in einem ersten Schritt der Vegetationskörper ebenerdig auf einer durchwurzelsicheren Folie ausgerollt, in einem zweiten Schritt wird der Vegetationskörper mit Substrat und keimfähigem Pflanzmaterial verfüllt und gärtnerisch gepflegt, werden in einem dritten Schritt die Löcher maschinell durch den Vegetationskörper in die Unterlage eingearbeitet und wird in einem vierten Schritt der Vegetationskörper aufgerollt und zum Dach transportiert.

Vorteilhaft an diesem Verfahren zur Herstellung des erfindungsgemäßen Vegetationsträgers ist, daß die Löcher einfach, schnell und preiswert in die auf dem Feld liegenden Vegetationskörper eingebracht werden. Hierbei wird dann auch die im Bedarfsfalle zwischen Strukturmatte und Unterlage angeordnete Zugarmierung mit gelocht.

Da derartige Vegetationskörper in der Regel maschinell geerntet, das heißt, aufgerollt werden, läßt sich im Bedarfsfall die Lochung gleichzeitig mit dem Aufrollen der Vegetationskörper vornehmen.

Alternativ kann das Verfahren unter Weglassung des dritten Schrittes durchgeführt werden, wenn ein Vegetationskörper verwendet wird, dessen Unterlage bereits vor Auflage auf der Folie mit Löchern versehen wurde.

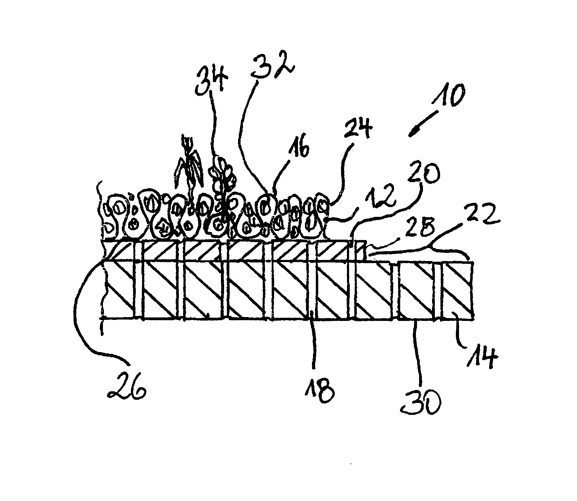

Weitere Vorteile und Ausgestaltungen der Erfindung werden anhand eines Ausführungsbeispieles in der Zeichnung, sowie in der Beschreibung anhand eines Ausführungsbeispieles und in den Patentansprüchen näher beschrieben.

In der Zeichnung ist ein Ausführungsbeispiel eines erfindungsgemäßen Vegetationskörpers 10 im Längsschnitt dargestellt. Der Vegetationskörper 10 entspricht weitgehend einem aus der DE 197 40 682 A1 bekannten Vegetationskörper und weist eine Strukturmatte 12 auf, welche über einer Unterlage 14 angeordnet ist. Im gezeigten Ausführungsbeispiel stellt sich die Strukturmatte 12 als Schlingenmatte 16 aus Polyamid-Schlinggewebe dar, welche mit Substrat 32 und mit Pflanzen 34 verfüllt ist. Das Substrat 32 ist hierbei ein für die extensive Dachbegrünung geeignetes Substrat.

Die Unterlage 14 ist im gezeigten Ausführungsbeispiel ein dichtes Baumwollvlies 30, welches eine hohe Wasserspeicherkapazität aufweist. Zwischen Unterlage 14 und Strukturmatte 12 ist ein Polyestervlies 28 angeordnet, welches der Aufnahme von Zugkräften dient. Anstelle des Polyestervlieses 28 kann auch ein PE-Gittergewebe oder ein ähnliches Material verwendet werden. Die Unterseite 26 des Polyestervlieses kann mit der Unterlage 14 verklebt, versteppt oder auf sonstige geeignete Weise mit der Unterlage 14 verbunden sein. Entsprechend kann das Polyestervlies mit der Strukturmatte 12 verbunden sein.

Entsprechend einer aus der DE 197 40 682 A1 bekannten Matte weist der Vegetationskörper 10 einen in der Zeichnung nicht dargestellten ersten Seitenkantenbereich, eine ebenfalls nicht dargestellte erste Seitenkante, einen zweiten Seitenkantenbereich 22 und eine zweite Seitenkante 24 auf. Diese über- bzw. unterlappenden Bereiche dienen der Zusammehfügung zweier Vegetationsträger 10, wobei dann durch die wurzelnde Tätigkeit der Pflanzen diese beiden überlappenden Vegetationsträger 10 miteinander verbunden werden.

Die als Baumwollvlies 30 ausgebildete Unterlage 14 und das Polyestervlies 28 sind mit Löchern 18, 20 versehen. Die Löcher 18, 20 sind in die Unterlage 14 bzw. in das Polyestervlies 28 maschinell durch sogenannte "Spuhns" mittels landwirtschaftlicher Geräte während der gärtnerischen Pflege des Vegetationskörpers eingearbeitet worden.

Durch die Löcher 18, 20 wird erreicht, daß Wind nicht flächig an den Vegetationskörper 10 angreifen kann. Die in der Regel auf einem Dach unterhalb des Vegetationskörpers 10 angeordnete Dichtungsfolie ist nämlich fest mit dem Dach verbunden, so daß diese Folie von dem Windsog nicht angehoben werden kann. Ein Unterdruck findet also keine Angriffsfläche; der Vegetationskörper 10 ist durch die Löcher 18, 20 lagesicher.

## Patentansprüche

1. Bahnförmiger Vegetationskörper (10) zur Dachbegrünung in Dünnschichtbauweise, mit einer Strukturmatte (12), welche auf wenigstens einer Unterlage (14) angeordnet ist, wobei die Strukturmatte mit einem Substrat (32) und mit keimfähigem Pflanzmaterial, insbesondere mit Samen, Sprossen, Sporen oder Sproßteilen, ausfüllbar ist, und wobei die Unterlage (14) ein filzartiges Vlies mit geringer Winddurchlässigkeit und hohem Wasserspeichervermögen ist, **dadurch gekennzeichnet, daß** wenigstens die Unterlage (14) durch Einbringen von Löchern (18; 20) winddurchlässig ausgerüstet ist.

2. Bahnförmiger Vegetationskörper nach Anspruch 1, **dadurch gekennzeichnet, daß** die Unterlage (14) ein Gewicht von 30 bis 3500 g/m² aufweist.

3. Bahnförmiger Vegetationskörper nach Anspruch 1 oder 2, **dadurch gekennzeichnet, daß** der Vegetationskörper (10) mit 50 bis 1500 Löchern pro Quadratmeter versehen ist, wobei die Löcher (18; 20) jeweils einen Durchmesser von 2 bis 20 mm aufweisen.

4. Bahnförmiger Vegetationskörper nach einem der Ansprüche 1 bis 3, **dadurch gekennzeichnet, daß** die Anzahl der Löcher (18; 20) in Abhängigkeit zur Dachhöhe gewählt ist.

5. Bahnförmiger Vegetationskörper nach einem der Ansprüche 1 bis 4, **dadurch gekennzeichnet, daß** die Strukturmatte (12) eine Schlingenmatte (16) ist.

6. Bahnförmiger Vegetationskörper nach einem der Ansprüche 1 bis 4, **dadurch gekennzeichnet, daß** die Strukturmatte (12) eine Fasermatte, insbesondere eine Fasermatte aus Kokosfasern, ist.

7. Bahnförmiger Vegetationskörper nach einem der Ansprüche 1 bis 6, **dadurch gekennzeichnet, daß** die Unterlage (14) ein dichtes Nadelvlies ist.

8. Bahnförmiger Vegetationskörper nach einem der Ansprüche 1 bis 6, **dadurch gekennzeichnet, daß** die Unterlage (14) ein Polyestervlies ist.

9. Bahnförmiger Vegetationskörper nach einem der Ansprüche 1 bis 6, **dadurch gekennzeichnet, daß** die Unterlage (14) ein Polypropylenvlies ist.

10. Bahnförmiger Vegetationskörper nach einem der Ansprüche 1 bis 6, **dadurch gekennzeichnet, daß** die Unterlage (14) ein dichtes Baumwollvlies (30) ist.

11. Bahnförmiger Vegetationskörper nach einem der Ansprüche 1 bis 6, **dadurch gekennzeichnet, daß** die Unterlage (14) eine Steinwollmatte ist.

12. Bahnförmiger Vegetationskörper nach einem der Ansprüche 1 bis 11, **dadurch gekennzeichnet, daß** zwischen Strukturmatte (12) und Unterlage (14) eine Armierung (28) zur Aufnahme von Zugkräften angeordnet ist.

13. Bahnförmiger Vegetationskörper nach einem der Ansprüche 1 bis 12, **dadurch gekennzeichnet, daß** die Strukturmatte (12) derart auf der Unterlage (14) angeordnet ist, daß ein erster Seitenkantenbereich der Strukturmatte (12) über eine erste Seitenkante der Unterlage (14) übersteht, daß ein gegenüberliegender zweiter Seitenkantenbereich (22) der Unterlage (14) unter einer zweiten Seitenkante (24) der Strukturmatte (12) hervorsteht, so daß Strukturmatte (12) und Unterlage (14) nebeneinander liegender Vegetationskörper einander jeweils überlappen und daß die sich überlappenden Bereiche in kultiviertem Zustand der Vegetationskörper in Folge der Durchwurzelungstätigkeit der Pflanzen (34) miteinander verbunden sind.

14. Verfahren zur Herstellung eines bahnförmigen Vegetationskörpers (10) zur Dachbegrünung in Dünnschichtbauweise gemäß einem der Ansprüche 1 bis 13, bei dem in einem ersten Schritt der Vegetationskörper (10) ebenerdig auf einer durchwurzelsicheren Folie ausgerollt wird, in einem zweiten Schritt der Vegetationskörper (10) mit Substrat (32) und keimfähigem Pflanzmaterial (34) verfüllt und gärtnerisch gepflegt wird, in einem dritten Schritt die Löcher (18; 20) maschinell durch den Vegetationskörper (10) in die Unterlage (14) eingearbeitet werden, und in einem vierten Schritt der Vegetationskörper (10) aufgerollt und zum Dach transportiert wird.

15. Verfahren zur Herstellung eines bahnförmigen Vegetationskörpers (10) zur Dachbegrünung in Dünnschichtbauweise gemäß einem der Ansprüche 1 bis 13, bei dem in einem ersten Schritt ein Vegetationskörper (10), dessen Unterlage (14) bereits mit Löchern (18;20) versehen wurde, ebenerdig auf einer durchwurzelsicheren Folie ausgerollt wird, in einem zweiten Schritt der Vegetationskörper (10) mit Substrat (32) und keimfähigem Pflanzmaterial (34) verfüllt und gärtnerisch gepflegt wird, und in einem dritten Schritt der Vegetationskörper (10) aufgerollt und zum Dach transportiert wird.

## Claims

1. Strip-like vegetation body (10) for roof planting in thin-layer construction, with a structure matting (12) arranged on at least one base (14), where the structure matting can be filled with a substrate (32) and germinatable plant material, in particular with seeds, shoots, spores or shoot sections, and where the base (14) is a felt-like non-woven fabric with low wind permeability and high water storage capacity, **characterised in that** essentially the base (14) is made wind-permeable by the introduction of holes (18, 20).

2. Strip-like vegetation body according to claim 1, **characterised in that** the base (14) has a weight of 30 to 3500 g/m².

3. Strip-like vegetation body according to claim 1 or 2, **characterised in that** the vegetation body (10) has 50 to 1500 holes per square metre, where the holes (18, 20) each have a diameter of 2 to 20 mm.

4. Strip-like vegetation body according to any of claims 1 to 3, **characterised in that** the number of holes (18, 20) is selected as a function of the roof height.

5. Strip-like vegetation body according to any of claims 1 to 4, **characterised in that** the structure matting (12) is a loop matting (16).

6. Strip-like vegetation body according to any of claim 1 to 4, **characterised in that** the structure matting (12) is a fibre matting, in particular a fibre matting of coconut fibres.

7. Strip-like vegetation body according to any of claims 1 to 6, **characterised in that** the base (14) is a dense tufted non-woven fabric.

8. Strip-like vegetation body according to any of claims 1 to 6, **characterised in that** the base (14) is a polyester non-woven fabric.

9. Strip-like vegetation body according to any of claims 1 to 6, **characterised in that** the base (14) is a polypropylene non-woven fabric.

10. Strip-like vegetation body according to any of claims 1 to 6, **characterised in that** the base (14) is a dense cotton non-woven fabric.

11. Strip-like vegetation body according to any of claims 1 to 6, **characterised in that** the base (14) is a rockwool matting.

12. Strip-like vegetation body according to any of claims 1 to 11, **characterised in that** between the structure matting (12) and the base (14) is arranged a reinforcement (28) to absorb tensile forces.

13. Strip-like vegetation body according to any of claims 1 to 12, **characterised in that** the structure matting (12) is arranged on the base (14) such that a first side edge area of the structure matting (12) projects over a first side edge of the base (14), that an opposing second side edge area of the base (14) extends below a second side edge (24) of the structure matting (12), so that the structure matting (12) and the base (14) of adjacent vegetation bodies overlap and that the overlapping areas in the cultivated state of the vegetation body are joined together as a result of the rooting activity of the plants (34).

14. Process for production of a strip-like vegetation body (10) for roof planting in thin-layer construction according to any of claims 1 to 13, in which in a first step the vegetation body (10) is rolled out at ground level onto a film secure against root penetration, in a second step the vegetation body (10) is filled with substrate (32) and germinatable plant material (34) and cultivated, in a third step the holes (18, 20) are worked mechanically through the vegetation body (10) into the base (14) and a fourth step the vegetation body (10) is rolled up and transported to the roof.

15. Process for production of a strip-like vegetation body (10) for roof planting in thin-layer construction according to any of claims to 1 to 13, in which in a first step a vegetation body (10), in the base (14) of which holes (18, 20) have already been made, is rolled out at ground level onto a film secure against root penetration, in a second step the vegetation body (10) is filled with substrate (32) and germinatable plant material (34) and cultivated, and in a third step the vegetation body (10) is rolled up and transported to the roof.

## Revendications

1. Corps de végétation (10) en forme de lé destiné au gazonnement de toits de type à couches minces avec une natte de structure (12) disposée sur une base (14) au moins, la natte de structure pouvant être remplie d'un substrat (32) et d'un matériau végétal germinatif comprenant notamment des semences, des pousses ou parties de pousses et la base (14) étant un non-tissé à l'aspect feutré avec une faible perméabilité au vent et un pouvoir élevé à emmagasiner l'eau, **caractérisé en ce que** la base (14) au moins est finie perméable au vent en y pratiquant des trous (18, 20).

2. Corps de végétation en forme de lé suivant la revendication 1, **caractérisé en ce que** la base (14) présente un poids compris entre 30 et 3500 g/m².

3. Corps de végétation en forme de lé suivant la revendication 1 ou 2, **caractérisé en ce que** le corps de végétation (10) est pourvu de 50 à 1500 trous par mètre carré, les trous (18, 20) présentant respectivement un diamètre de 2 à 20 mm.

4. Corps de végétation en forme de lé suivant une des revendications 1 à 3, **caractérisé en ce que** le nombre de trous (18, 20) est choisi en fonction de la hauteur du toit.

5. Corps de végétation en forme de lé suivant une des revendications 1 à 4, **caractérisé en ce que** la natte de structure (12) est une natte bouclée (16).

6. Corps de végétation en forme de lé suivant une des revendications 1 à 4, **caractérisé en ce que** la natte de structure (12) est une natte de fibres, notamment une natte de fibres de coco.

7. Corps de végétation en forme de lé suivant une des revendications 1 à 6, **caractérisé en ce que** la base (14) est un non-tissé aiguilleté étanche.

8. Corps de végétation en forme de lé suivant une des revendications 1 à 6, **caractérisé en ce que** la base (14) est un non-tissé en polyester.

9. Corps de végétation en forme de lé suivant une des revendications 1 à 6, **caractérisé en ce que** la base (14) est un non-tissé en polypropylène.

10. Corps de végétation en forme de lé suivant une des revendications 1 à 6, **caractérisé en ce que** la base (14) est un non-tissé étanche en coton (30).

11. Corps de végétation en forme de lé suivant une des revendications 1 à 6, **caractérisé en ce que** la base (14) est une natte en laine de roche.

12. Corps de végétation en forme de lé suivant une des revendications 1 à 11, **caractérisé en ce qu'**une armature (28) destinée à absorber les forces de traction est disposée entre la natte de structure (12) et la base (14).

13. Corps de végétation en forme de lé suivant une des revendications 1 à 12, **caractérisé en ce que** la natte de structure (12) est disposée sur la base (14) de façon qu'une première zone d'arête latérale de la natte de structure (12) va en saillie au-dessus d'une première arête latérale de la base (14), qu'une seconde zone d'arête latérale opposée (22) de la base (14) va en saillie au-dessous d'une seconde arête latérale (24) de la natte de structure (12), de sorte que la natte de structure (12) et la base (14) de plusieurs corps de végétation, posés l'un contre l'autre, se chevauchent respectivement et que les zones se chevauchant sont reliées, l'une à l'autre, suite à l'enracinement des plantes (34) en état cultivé des corps de végétation.

14. Procédé de fabrication d'un corps de végétation (10) en forme de lé de type à couches minces destiné au gazonnement de toits suivant une des revendications 1 à 13, selon lequel, dans une première étape, le corps de végétation (10) est déroulé au niveau du sol sur une feuille résistante au passage des racines, qu'il est rempli, dans une seconde étape, de substrat (32) et d'un matériau végétal germinatif (34), après quoi il fait l'objet de soins de jardinage, que des trous (18, 20) sont pratiqués mécaniquement à travers le corps de végétation (10) dans la base (14) dans une troisième étape, et que le corps de végétation (10) est enroulé et transporté sur le toit dans une quatrième étape.

15. Procédé de fabrication d'un corps de végétation en forme de lé (10) de type à couches minces destiné au gazonnement de toits suivant une des revendications 1 à 13, selon lequel dans une première étape, un corps de végétation (10), dont la base (14) est déjà pourvue de trous (18, 20) est déroulé au niveau du sol sur une feuille résistante au passage des racines, que, dans une seconde étape, le corps de végétation (10) est rempli de substrat (32) et d'un matériau végétal germinatif (34) et fait l'objet de soins de jardinage, et que, dans une troisième étape, le corps de végétation (10) est enroulé et transporté sur le toit.
